# FASCICULE DE BREVET EUROPEEN

(11) **EP 1 344 343 B1**
(45) Date de publication et mention de la délivrance du brevet: **06.01.2010**
(21) Numéro de dépôt: 01969907.3
(22) Date de dépôt: 17.09.2001
(51) Int. Cl.: H04L 9/30

(54) **PROCEDE DE CHIFFREMENT ET D'IDENTIFICATION**
VERFAHREN ZUR VERSCHLÜSSELUNG UND ZUR IDENTIFIZIERUNG
ENCRYPTION AND IDENTIFICATION METHOD

(30) Priorité: 22.09.2000 FR 0012122; 05.03.2001 FR 0102953
(43) Date de publication de la demande: 17.09.2003
(73) Titulaire: Pele, Laurent, 78700 Conflans Sainte Honorine (FR)
(72) Inventeur: Pele, Laurent, 78700 Conflans Sainte Honorine (FR)
(86) Numéro de dépôt international: PCT/FR2001/002882
(87) Numéro de publication internationale: WO 2002/025863

(56) Documents cités:
- EP-A- 0 100 260
- EP-A- 0 851 335
- SCHNEIER B: "SPECIAL ALGORITHMS FOR PROTOCOLS" APPLIED CRYPTOGRAPHY, J. WILEY, 1994, pages 376-377, XP002062163 NEW YORK

## Description

La plupart des systèmes d'authentification utilisent maintenant des fonctions de chiffrement à clé asymétriques basés sur des couples clé publique/clé secrête tel que les procédés RSA (du nom de leurs auteurs Rivest Shamir Adelman) ou Diffie Hellmann.

Cependant, si ces procédés de chiffrement asymétriques sont très pratiques à utiliser, ils ne sont pas très rapide au niveau temps de traitement : des fonctions symétriques tes que IDEA avec des clés de 128 bits sont beaucoup plus rapides.

Enfin, il existe pour ces procédés d'authentification à clé asymétriques tels que RSA des attaques consistant en la décomposition de la clé publique en facteurs premiers.

En l'état actuel de la technique des clés RSA de 570 bits environ ont été cassées et avec les progrès conjugués en matière de factorisation (algorithmes dits « Multipolynomial Quadratic Sieve » MPQS, courbes elliptiques, etc...) et vitesse des processeurs, cette limite progresse rapidement, de sorte qu'il existe des doutes sérieux sur l'utilisation de clés RSA de 2048 bits pour un horizon de 5 ans.

Pour une taille de clés identique, les procédés de chiffrement ou authentification symétriques offrent une sécurité bien supérieure par rapport aux procédés de chiffrement ou authentification asymétrique : on estime qu'une clé symétrique IDEA 128 bits est équivalente à une clé RSA de 2048 bits.

De plus, la technologie actuelle ne permet pas d'utiliser des clés énormes. Les cartes à puce supportant le RSA ont généralement des tailles de clé de 1024 bits seulement actuellement, le maximum sur une carte à microprocesseur actuellement connu est de 2048 bits.

Quant aux protocoles à apport nul de connaissance, ils sont quand même sensibles à une attaque consistant à décomposer la clé publique en facteurs premiers.

Le problème principal des algorithmes de chiffrement symétriques est d'échanger la clé secrète par un canal sûr préalablement au chiffrement. Ce qui était fait couramment, jusqu'à présent, pour éviter le problème de la sécurité des échanges des clés secrètes, était d'échanger les clés privées à l'aide d'un chiffrement asymétrique utilisant des couples clé publique/privée puis de faire un chiffrement symétrique du message à l'aide d'un procédé de chiffrement symétrique plus rapide.

La force d'une chaîne ne valant que par son maillon le plus faible, une telle chaîne de chiffrement (échange des clés privées à l'aide d'un procédé de chiffrement asymétrique à clé publique puis chiffrement du message avec un procédé symétrique utilisant cette clé privée) reste toujours sensible aux attaques par factorisation de nombres premiers outre les attaques sur les attaques sur les procédés de chiffrement symétriques.

Les attaques des procédés de chiffrement symétriques sont essentiellement des attaques par force brute, c'est à dire, essai.de toutes les combinaisons possibles, cela paraît raisonnablement hors de portée pendant de longues années, lorsque les clés font 128 bits, il n'y a pas assez de capacité de traitement et de stockage dans l'univers pour casser de tels codes. De sorte que revenir à des procédés de chiffrement et authentification symétrique peut offrir une sécurité renforcée pour des performances améliorées. La difficulté consiste à trouver un protocole d'authentification dont les caractéristiques permettent d'offrir les fonctionnalités désirées, notamment s'affranchir du problème d'échange préalable des clés de chiffrement par un canal sûr.

Le procédé de chiffrement décrit ici utilise un dialogue de 2 échanges de messages avec le système destination pour échanger entre eux des messages chiffrés, les 2 systèmes dialoguant entre eux ne partagent pas de secret : il n'y a donc pas de problème d'échanges de clés secrètes. De plus, les clés utilisées pour le chiffrement sont générées aléatoirement et différents à chaque dialogue, si par extraordinaire, un message serait intercepté ou déduit, aucune déduction ne pourrait être faite pour les autres messages échangés. Dans le cas où les systèmes de chiffrement sont des cartes à microprocesseur, les clés de chiffrement ne sortent pas de la carte à microprocesseur et ne sont utilisés qu'une fois, un attaquant éventuel n'apprend rien lors des échanges de messages.

C'est ce protocole basé sur un dialogue de plusieurs échanges de messages qui permet de s'affranchir de l'échange des clés secrètes.

Cela est rendu possible en utilisant les propriétés de la fonction exponentielle dans un anneau de nombres entiers modulo un nombre N fixé (l'ensemble des nombres entiers compris entre 0 et N-1 muni de l'addition modulo N et de la multiplication modulo N). En effet, il est difficile d'inverser la fonction exponentielle dans un anneau de nombres entiers modulo un nombre N fixé.

C'est à dire que connaissant A et A^B mod N (A élevé à la puissance B modulo N), il est très difficile de retrouver B.

La fonction inverse de l'exponentielle s'appelle le logarithme discret et il n'existe pas à l'heure actuelle de méthode ou d'algorithme pour la calculer dans un temps raisonnable même avec une grande puissance de calcul lorsque le nombre N choisi est suffisamment grand.

Le système proposé ne subit donc que les attaques par violation du secret de la puce ou par inversion du logarithme discret.

Cependant, quand le nombre N fixé est un produit de 2 nombres premiers, il a été prouvé que résoudre le problème précédent du logarithme discret est équivalent dans certains cas (par exemple quand A^B mod N est égal à 2) au problème de la factorisation de ce nombre N en facteurs premiers.

Il est ainsi fortement conseillé d'utiliser un nombre premier N pour le procédé décrit ici, afin d'éviter précisément les faiblesses des autres procédés de chiffrement symétrique.

Outre le caractère difficilement inversible de la fonction exponentielle, il y a d'autres propriétés mathématiques de la fonction exponentielle dans un anneau de nombres entiers modulo un nombre N qui sera exploitée par ce procédé : c'est le caractère symétrique et l'associativité de la fonction.

La fonction exponentielle est commutative : f o g = g o f , c'est à dire si on calcule M2=M1^A mod N puis M3=M2^B mod N, on a le même résultat que si on calcule M4=M1^B mod N puis MS=M4^A mod N, on a M5=M3.

La fonction exponentielle est associative, c'est à dire (fog) oh =fo (go h), c'est à dire si on calcule M2=M1^A mod N puis M3=M2^B mod N et M4=M3^C mod N, on a le même résultat que si on calcule MS=M1^B mod N puis M6=M5^C mod N, puis M7=M6^A mod N on a M7=M4.

La fonction exponentielle modulo N est cependant facilement inversible lorsque l'exposant est connu.
Ainsi, si M2=M1^A1 mod N
Si on connaît le nombre entier phiN égal au résultat de l'indicatrice d'Euler de N (phiN=N-1 lorsque N est premier, phiN=(P-1)*(Q-1) lorsque N=PxQ, P et Q étant 2 nombres premiers distincts).

L'inverse Alprime de A1 est tel que Alprime*A1= 1 modulo PhiN

Cela se calcule facilement à l'aide de l'algorithme d'Euclide étendu par divisions euclidiennes successives - Ainsi M3=M2^Alprime mod N est égal à M1.

Le système de chiffrement est de plus généralisable au cas où il y a plus de 2 systèmes s'échangeant des messages chiffrés, il suffit qu'il y ait soit plusieurs dialogues duaux entre le système émetteur du message et les autres, soit que les messages circulent en boucle entre les différents systèmes intervenants dans la communication.

La sécurité du procédé de chiffrement est également extensible par augmentation de la taille du nombre N, ce qui permet à la mise en oeuvre du procédé d'évoluer et d'être adapté aux technologies disponibles (notamment la capacité et la vitesse de traitement des cartes à microprocesseur).

Le procédé pourrait être généralisé à d'autres fonctions que la fonction exponentielle qui ont les mêmes propriétés mathématiques (caractère difficilement inversible, commutativité, associativité).

Le procédé de chiffrement peut être étendu à l'identification, il suffit pour cela que le message chiffré échangé par les systèmes comporte un secret partagé. Il y a dans ce cas non seulement identification mais chiffrement : le secret partagé des 2 systèmes n'est pas échangé en clair entre les 2 systèmes, il s'agit dans ce cas d'un procédé de chiffrement à des fins d'authentification. C'est notamment très intéressant dans le cas où ces systèmes sont des cartes à microprocesseur tels que des porte-monnaie électronique comportant une valeur secrète inscrite dans une zone inviolable de la carte à microprocesseur.

Concernant les attaques possibles, pour un porte monnaie électronique avec clé RSA, il peut être attaqué soit par factorisation de la clé publique, soit en perçant le secret de la carte à puce par espionnage du comportement électronique du composant.

Une fois le secret découvert, il est possible de faire un clonage de carte à microprocesseur par exemple soit en simulant le comportement de la carte à microprocesseur originale en programmant un microprocesseur PIC (Programmable Integrated Circuit) muni d'une EEPROM sur une Wafercard soit en utilisant des kits de programmation de cartes à puce comme il en existe de nombreux sur le marché.

Le clonage revient à casser tout le système en matière de porte-monnaie électronique décentralisé (permettant les échanges sans passer par l'intermédiaire d'un serveur centralisé) puisqu'il n'y a pas de connexion avec un central par définition, il ne peut y avoir raisonnablement de gestion de liste noire.

Il est possible de mettre en oeuvre ces procédés de chiffrement et d'authentification avec la technologie existante des cartes à microprocesseurs basées sur la technologie RSA car leur jeu d'instructions permet de faire des opérations sur des grands nombres modulo P, même si P est un nombre premier et non pas un produit de 2 nombres premiers (dans le cas RSA, P est un produit de 2 nombres premiers différents) et dans notre cas, P sera de préférence un nombre premier.

Enfin si l'échange de 4 messages pour une authentification serait vraiment pénible pour le chiffrement ou authentification de message électronique par exemple (du fait du nombre de messages), cela ne présente pas d'inconvénient pour des échanges automatisés sans intervention manuelle entre composants électroniques présents tous les 2 chez un commerçant, ou même connectés entre eux en ligne pour une transaction à distance sur Internet par exemple.

### Exposé du procédé :

Procédé de transfert d'un message M1 sous forme chiffrée d'un support A à un autre support B caractérisé en ce que ces 2 supports A et B sont équipés de moyens de calcul, de mémorisation et d'échange de données appropriés, les 2 supports possédant en commun :
- un nombre entier public N, premier ou non
- un nombre entier E secret inférieur à N
- une fonction h indiquant les codes admissibles I [tels que h(I) différent de 0]
- une fonction f_{I} telle que quelquesoit I, quelquesoit J, quelquesoit x entiers inférieurs à N, f_{I} (f_{J} (x)) = f_{J} (f_{I} (x)) et telle que pour tout x entier inférieur à N et pour tout I compris entre 1 et N tel que h(I) différent de 0, il existe un J tel que f_{J} ( f_{I} (x))=x (on notera J= g(I)). La série de fonction f_{I} étant par ailleurs difficilement inversible, c'est à dire connaissant des couples (x1, f_{I} (x1)), (x2, f_{I} (x2) ), il est difficile de retrouver I procédé dans lequel les 2 supports mettent en oeuvre leurs moyens de calcul, de mémorisation et d'échange de données pour effectuer les opérations successives des différentes étapes suivantes :

### Etape 1.

le support A tire au hasard un nombre A1 compris entre 1 et N tel que h(A1) différent de O A envoie a B le nombre f_{E} ( f _{A1} (M1)) =M2

### Etape 2.

Le support B reçoit M2
B génère un nombre aléatoire B 1 tel que h(B 1) différent de O
B envoie à A le nombre f_{B1} (M2) = M3

### Etape 3.

A reçoit M3
A calcule l'inverse Alprime de A1 tel que Alprime= g(A1)
A envoie à B f_{A1 prime} (M3) = M4

### Etape 4.

B calcule l'inverse B1 prime de B1 tel que B1 prime = g(B1) et l'inverse Eprime de E tel que Eprime = g(E)
B calcule f_{B1 prime} (f_{E prime} (M4)) =M5
Comme M5=M1 d'après les propriétés de la série de fonctions, le message M1 a été échangé du support A vers le support B sans jamais avoir été échangé en clair et sans même avoir échangé les clés entre les 2 supports.

Selon une variante de ce procédé, les 2 supports A et B partagent un secret S et le message M1 comporte ce secret S et le support B vérifie à la fin de l'étape 4 que le message M5 comporte bien le secret S. Si oui alors le support A a été authentifié par le support B.

Cela donne donc le procédé suivant :
Procédé de transfert d'un message M1 sous forme chiffrée d'un support A à un autre support B à des fins d'authentification du support A caractérisé en ce que ces 2 supports A et B sont équipés de moyens de calcul, de mémorisation et d'échange de données appropriés, les 2 supports possédant en commun :
   - un nombre entier public N, premier ou non
   - un nombre entier E secret inférieur à N
   - un nombre secret S
   - une fonction h indiquant les codes admissibles I [tels que h(I) différent de 0]
   - une fonction f_{I} telle que quelquesoit I, quelquesoit J, quelquesoit x entiers inférieurs à N, f_{I} (f_{J} (x))= f_{J}(f_{I} (x)) et telle que pour tout x entier inférieur à N et pour tout I compris entre 1 et N tel que h(I) différent de 0, il existe un J tel que f_{J} (f_{I} (x))=x (on notera J= g(I)). La série de fonction f_{I} étant par ailleurs difficilement inversible, c'est à dire connaissant des couples (x1, f_{I}(x1)), (x2, f_{I} (x2) ), il est difficile de retrouver I procédé dans lequel les 2 supports mettent en oeuvre leurs moyens de calcul, de mémorisation et d'échange de données pour effectuer les opérations successives des différentes étapes suivantes :

### Etape 1.

le support A tire au hasard un nombre A1 compris entre 1 et N tel que h(A1) différent de ∅ le support A choisit un message M1 composé de S
A envoie a B le nombre f_{E}(f_{A1} (M1)) =M2

### Etape 2.

Le support B reçoit M2
B génère un nombre aléatoire B1 tel que h(B1) différent de ∅
B envoie à A le nombre f_{B1} (M2) = M3

### Etape 3.

A reçoit M3
A calcule l'inverse A1prime de A1 tel que A1prime = g(A1)
A envoie à B f_{A1prime} (M3) = M4

### Etape 4.

B calcule l'inverse B1prime de B1 tel que B1prime = g(B1) et l'inverse Eprime de E tel que Eprime = g(E)
B calcule f_{B1prime} ( f _{Eprime} (M4)) =M5
Comme MS=M1 d'après les propriétés de la série de fonctions, le message M1 a été échangé du support A vers le support B sans jamais avoir été échangé en clair et sans même avoir échangé les clés entre les 2 supports. Si M5 comporte le secret S alors le support B a bien authentifié le support A comme connaissant le secret.

Selon une autre variante du procédé précédent, les supports A et B sont dotés d'un nombre N premier et la fonction f égale à l'exponentielle dans l'anneau des nombres entiers compris entre 0 et N-1, N étant premier, c'est à dire f_{I} (x) =x^I mod N.:

L'inverse B lprime= g(B1) de B 1 est tel que B1prime*B1 = 1 modulo N-1

Cela se calcule facilement à l'aide de l'algorithme d'Euclide étendu par divisions euclidiennes successives
La fonction h(X) vaut 0 si et seulement si X n'est pas premier avec N-1

### Indication de la manière dont l'invention est susceptible d'application industrielle :

Le procédé est particulièrement adaptée à l'échange de données confidentielles entre 2 ordinateurs personnels via un réseau ouvert.

Le procédé peut s'appliquer aussi pour l'échange de données entre 2 cartes à microprocesseur. Le procédé d'authentification décrit est particulièrement adapté pour effectuer de l'authentification croisée de 2 systèmes homologues (détenant un secret partagé) électroniquement sûr à l'aide de fonction de chiffrement symétrique difficilement inversible. Le procédé peut s'appliquer à des cas de composants électroniques ou informatiques permettant de garder un secret telle que la carte à microprocesseur, carte à puce, carte a micro-circuit, coupleur USB (Universal Serial Bus).

Il peut avoir une application monétique dans le domaine du porte-monnaie électronique.

Il peut s'appliquer aussi à des systèmes d'authentification ou d'identification (accès sécurisés...)

Le procédé peut être utilisée pour une authentification mutuelle de 2 composants sécurisés tel que l'identification de chacun des systèmes électroniquement sûr soit authentifié par un dialogue comportant 2 messages envoyés et de 1 réponse

Pour que l'identification soit croisée, le même procédé est utilisé pour l'autre système puisque les composants sont homologues, mais les échanges de messages sont faits dans l'autre sens (au lieu que ce soit le composant A qui commence à envoyer les messages, c'est le composant B)

Le procédé est particulièrement adapté pour les identifications croisées de cartes à microprocesseurs dotées de secrets partagés

Les échanges de données entre les 2 cartes à microprocesseurs peuvent être réalisés par l'intermédiaire d'un boîtier lecteur de carte à mémoire disposant d'une interface d'échange de données avec un autre boîtier homologue

## Revendications

1. Procédé de transfert d'un message M1 sous forme chiffrée d'un support A à un autre support B **caractérisé en ce que** ces 2 supports A et B sont équipés de moyens de calcul, de mémorisation et d'échange de données appropriés, les 2 supports possédant en commun :
- un nombre entier public N, premier ou non
- un nombre entier E secret inférieur à N
- une fonction h indiquant les codes admissibles I tels que h(I) différent de 0
- une fonction f_{I} telle que quelquesoit I, quelquesoit J, quelquesoit x entiers inférieurs à N, f_{I} (f _{J}(x))=f_{J}(f_{I}(x)) et telle que pour tout x entier inférieur à N et pour tout I compris entre 1 et N tel que h(I) différent de 0, il existe un J tel que f_{J}(f_{I}(x))=x, on notera J= g(I). La série de fonction f_{I} étant par ailleurs difficilement inversible, c'est à dire connaissant des couples (x1, f_{I} (x1)), (x2, f_{I}(x2) ), il est difficile de retrouver I
procédé dans lequel les 2 supports mettent en oeuvre leurs moyens de calcul, de mémorisation et d'échange de données pour effectuer les opérations successives des différentes étapes suivantes :
Etape 1.
le support A tire au hasard un nombre A 1 compris entre 1 et N tel que h(A1) différent de O A envoie a B le nombre f_{E} ( f_{A1} (M1)) =M2
Etape 2.
Le support B reçoit M2
B génère un nombre aléatoire B1 tel que h(B1) différent de O
B envoie à A le nombre f_{B1} ( M2 ) =M3
Etape 3.
A reçoit M3
A calcule l'inverse Alprime de A1 tel que Alprime = g(A1)
A envoie à B f_{A1prime} (M3) =M4
Etape 4.
B calcule l'inverse B1prime de B1 tel que B1prime = g( B1) et l'inverse Eprime de E tel que Eprime = g(E)
B calcule f_{B1prime} ( f_{Eprime} (M4)) =M5 Comme M5=M1 d'après les propriétés de la série de fonctions, le message M1 a été échangé
du support A vers le support B sans jamais avoir été échangé en clair et sans même avoir échangé les clés entre les 2 supports.

2. Procédé de transfert d'un message M1 sous forme chiffrée selon la revendication numéro 1 à des fins d'authentification **caractérisé par le fait que** les supports A et B possèdent en commun un secret S partagé, le message M1 à l'étape 1 comporte ce secret S et après l'étape 4, le support B vérifie que le message M5 obtenu comporte bien le secret S, ce qui lui permet de vérifier que le support A connaît bien ce secret S.

3. Procédé de transfert d'un message M1 sous forme chiffrée à des fins d'authentification selon la revendication numéro 2 pour lequel le support A possède un identifiant unique du support I_{A} non secret et le message M1 échangé à l'étape 1 comporte, outre le secret S, cet identifiant I_{A}

4. Procédé selon l'une quelconque des revendications 1 à 3 à pour lequel l'un des supports est une carte à microprocesseur

5. Procédé selon l'une quelconque des revendications 1 ou 4 pour lequel l'un des supports est un micro-ordinateur

## Claims

1. Encryption method of a message M 1 from a support A to a support B where both supports have appropriate calculations, storage and data exchange features and both supports have in common:
- A public integer N, prime or not
- A secret integer E, less than N
- A function h giving I codes that can be used, so that h(I) is different from 0
- A function f_{I} so that whatever I integer, whatever J integer, whatever x integer less than N, f_{I} ( f_{J}(x))=f_{J}(f_{I}(x)); and for any x integer less than N and for any I integer between 1 and N so that h(I) is different from 0, J exists so that f_{J} ( f_{I} (x))=x,we will call J= g(I). The series of functions f_{I} are difficult to revert. It means that if we know (x1, f_{I} (x1)), (x2, f_{I}(x 2) ) couples, it is difficult to find I
In this method, both supports use their calculations, storage and data exchange features to process the following operations according to these steps :
Step 1.
Support A randomly generates an A1 number between 1 and N so that h(A1) is different from 0
A sends to B the number f_{E} ( f_{A1} (M1)) =M2
Step 2.
Support B receives M2
B generates a random number B 1 so that h(B1) is different from 0
B sends to A the number f_{B1}(M2) = M3
Step 3.
A receives M3
A computes A1prime which is the reverse value of A 1 so that A1prime = g(A1)
A sends to B f_{A1prime} (M3) =M4
Step 4.
B computes B 1 prime which is the reverse value of B 1 so that B 1 prime = g(B 1) and B computes Eprime which is the reverse value of E so that Eprime = g(E)
B computesf_{B1prime} ( f _{Eprime} (M4)) =M5
As M5=M1 according to the properties of the series of functions, the M 1 message has been exchanged from support A to support B without being sent in plain text and without exchanging keys between both supports.

2. Encryption method of an M1 message according to claim 1 for identification purposes where both supports share a secret S. M 1 message contains S at step I and after step 4, support B check that M5 message contains this secret S so that it can ensure that support A knows this secret.

3. Encryption method for identification purposes according to claim 2 where support A has a unique identification number I_{A}, not secret and M1 message at step I contains both secret S and I_{A}

4. Method according to any of the claims 1 to 3 where one of the supports is a smart card

5. Method according to any of the claims 1 to 4 where one of the supports is a computer

## Patentansprüche

1. Verfahren zur Übertragung einer Mitteilung M1 in verschlüsselter Form von einem Träger A auf einen anderen Träger B, **gekennzeichnet dadurch, dass** diese beiden Träger A und B mit geeigneten Vorrichtungen zur Berechnung, Speicherung und des Datenaustauschs ausgestattet sind und die 2 Träger Folgendes gemein haben:
- eine ganze bekannte Zahl N, Primzahl oder nicht
- eine ganze geheime Zahl E niedriger als N
- eine Funktion h, die die zulässigen Kennzahlen I angibt, wie z.B. h(I) ungleich 0
- eine Funktion f_{I} z.B. eine beliebige ganze Zahl I, beliebige ganze Zahl J, beliebige ganze Zahl x niedriger als N, f_{I} ( f_{J} (x))=f_{J}(f_{I}(x)) und so für jede ganze Zahl x niedriger als N und für jede Zahl I zwischen 1 und N wie z.B. h(I) ungleich 0, es gibt ein J wie z.B. f_{J}(f_{I} ( x ) ) = x, wobei J= g(I). Da die Funktionsreihe f_{I} zudem nur schwer umkehrbar ist, d.h. wenn die Paare (x1, f_{I} (x1)), (x2, f_{I} (( x 2)) bekannt sind, ist es schwierig, 1 Verfahren zu finden, in denen die 2 Träger ihre Vorrichtungen zur Berechnung, Speicherung oder des Datenaustauschs einsetzen, um die aufeinanderfolgenden Operationen der folgenden verschiedenen Schritte auszuführen:
1. Schritt.
Der Träger A zieht eine beliebige Zahl A1 zwischen 1 und N wie z.B. h(A1) ungleich 0
A sendet B die Zahl f_{E} (f_{A1} (M1)) = M2
2. Schritt.
Der Träger B empfängt M2
B erzeugt eine zufällige Zahl B 1 wie z.B. h(B1) ungleich 0
B sendet A die Zahl f_{B1}(M2) = M3
3. Schritt.
A empfängt M3
A berechnet umgekehrt A1prim von A 1 wie z.B. A1prim =g(A1)
A sendet B f_{A1prim} (M3) =M4
4. Schritt.
B berechnet umgekehrt B1prim von B 1 wie z.B. B1prim =g(B1) und umgekehrt Eprim von E wie z.B. Eprim = g(E)
B berechnet f_{B1prim} ( f _{Eprim} (M4)) =M5
Da entsprechend den Eigenschaften der Funktionsreihe M5=M1, wurde die Mitteilung M1 zwischen Träger A und Träger B ausgetauscht, ohne jemals deutlich ausgetauscht worden zu sein und ohne die Schlüssel zwischen den 2 Trägem ausgetauscht zu haben.

2. Verfahren zum Austausch einer Mitteilung M1 in verschlüsselter Form gemäß Forderung Nummer 1 zur Authentifizierung, **gekennzeichnet dadurch, dass** die Träger A und B eine geheime Zahl S gemein haben. Die Mitteilung M1 enthält im 1. Schritt dieses geheime S und nach dem 4. Schritt prüft Träger B, ob die erhaltene Mitteilung M5 das geheime S enthält, was es ihm ermöglicht, sicherzustellen, dass Träger A das geheime S kennt.

3. Verfahren zum Austausch einer Mitteilung M1 in verschlüsselter Form zur Authentifizierung gemäß Forderung Nr. 2, für die der Träger A eine nicht geheime Benutzeridentifizierung des Trägers I_{A} besitzt und die im 1. Schritt ausgetauschte Mitteilung M1 außer dem geheimen S diese Benutzeridentifizierung I_{A} enthält.

4. Verfahren gemäß einer beliebigen Forderung 1 bis 3, für die einer der Träger eine Karte mit Mikroprozessor ist.

5. Verfahren gemäß einer beliebigen Forderung 1 oder 4, für die einer der Träger ein Mikrocomputer ist.
